# FASCICULE DE BREVET EUROPEEN

(11) **EP 0 454 808 B1**
(45) Date de publication et mention de la délivrance du brevet: **23.06.1993**
(21) Numéro de dépôt: 90916228.1
(22) Date de dépôt: 16.11.1990
(51) Int. Cl.: A23G 1/04, A23G 1/00

(54) **REACTEUR POUR TRAITER UNE LIQUEUR DE CACAO ET SES DERIVES**
REAKTOR FÜR DIE BEHANDLUNG VON FLÜSSIGEM KAKAO UND SEINEN DERIVATEN
REACTION VESSEL FOR PROCESSING A COCOA LIQUOR AND THE DERIVATIVES THEREOF

(30) Priorité: 20.11.1989 FR 8915385
(43) Date de publication de la demande: 06.11.1991
(73) Titulaire: SERVCO S.P.A., I-20121 Milano (IT)
(72) Inventeur: CHAUVEAU, Jean-Marie, CH-2023 Gorgier (CH)
(74) Mandataire: Nithardt, Roland
(86) Numéro de dépôt international: CH9000263
(87) Numéro de publication internationale: WO9107099

(56) Documents cités:
- EP-A- 178 349
- DE-A- 3 112 994

## Description

La présente invention concerne un réacteur pour traiter une liqueur de cacao et ses dérivés, comportant :
- une cuve fermée pourvue d'au moins une entrée et une sortie pour ladite liqueur, et agencée pour contenir cette liqueur en dessous d'un niveau maximal donné,
- des moyens de chauffage de la liqueur,
- au moins un raccord à vide, reliant la cuve à une pompe à vide,
- des moyens pour introduire des fluides de traitement dans la cuve,
- des moyens d'agitation comportant un arbre rotatif s'étendant verticalement dans la cuve, des organes d'agitation montés sur cet arbre et des organes d'entraînement couplés à cet arbre, et
- des moyens de circulation comportant au moins une pompe et un dispositif de projection alimenté par cette pompe, la pompe prélevant de la liqueur au bas de la cuve, et le dispositif de projection étant agencé pour projeter cette liqueur dans une partie supérieure de la cuve, au-dessus dudit niveau maximal.

Un tel réacteur est destiné à accomplir sur un liquide contenant du cacao et/ou des produits similaires tels que des pâtes de noisettes, d'amandes etc., un ou de préférence plusieurs des traitements suivants :
- pasteurisation;
- stérilisation;
- désacidification;
- alcalinisation, notamment par potassage;
- développement par la réaction de Maillar d'une phase aromatique supplémentaire, en ajoutant des acides aminés et des sucres réducteurs;
- torréfaction en phase liquide;
- finissage du chocolat.

La demande de brevet DE-A-3 112 994 décrit un réacteur de ce genre, dans lequel l'arbre rotatif porte, en plus des organes d'agitation, plusieurs chicanes hélicoïdales qui tournent dans une gaine tubulaire fixe, formant ainsi des pompes axiales qui créent différentes circulations de la liqueur à l'intérieur de la cuve. L'une de ces pompes axiales a pour effet d'envoyer un courant de liqueur dans un organe de dispersion à palettes, projetant la liqueur par effet centrifuge contre des obstacles, notamment pour lui mélanger intimement une addition d'eau ou d'un autre liquide, ainsi que pour aérer la liqueur afin d'en extraire des substances volatiles. Ce genre de réacteur permet d'effectuer toute une série de traitements thermiques, mécaniques et chimiques sur une liqueur de cacao, de façon à la stériliser et à obtenir en outre différentes améliorations de ses propriétés rhéologiques, chimiques, gustatives et autres.

Cependant, ce dispositif présente divers inconvénients. A part la complication constructive et l'encombrement des pompes hélicoïdales montées sur l'arbre, la présence d'une structure tubulaire stationnaire autour de celles-ci, en particulier entre l'arbre et des serpentins de chauffage immergés dans la liqueur de cacao, empêche d'obtenir une agitation efficace de la liqueur à proximité des serpentins et limite donc la transmission de chaleur sur ceux-ci. En outre, la vitesse de pompage est limitée par les organes d'agitation, et varie donc fortement avec la viscosité de la liqueur. Enfin, tout ce dispositif de pompage complique le nettoyage du réacteur.

La présente invention a pour but de fournir un réacteur agencé de manière à éviter les inconvénients mentionnés ci-dessus, et susceptible d'améliorer encore l'efficacité de certains traitements de la liqueur de cacao dans le réacteur.

Dans ce but, l'invention concerne un réacteur du genre spécifié en préambule, caractérisé en ce que la pompe des moyens de circulation se trouve à l'extérieur de la cuve et est actionnée par des moyens d'entraînement qui sont distincts de ceux de l'arbre rotatif. De plus, les moyens de circulation comportent un conduit d'aspiration, reliant ladite sortie de la cuve à la pompe, et un conduit de refoulement allant de la pompe jusqu'à l'intérieur de la cuve, et des moyens pour introduire des fluides dans la liqueur sont raccordés à ladite conduite d'aspiration. Lesdits moyens pour introduire des fluides peuvent comporter notamment des moyens pour introduire de l'eau ou des solutions aqueuses, et/ou des moyens pour introduire de l'air.

Dans une forme de réalisation particulière, l'arbre rotatif comporte un canal central s'étendant vers le haut à partir de l'extrémité inférieure de l'arbre, le conduit de refoulement s'étend dans ledit canal central, et le dispositif de projection est disposé sur ou dans l'arbre rotatif.

Dans ce cas, le dispositif de projection peut être monté sur un tube axial stationnaire formant le conduit de refoulement à l'intérieur dudit canal central et se trouver en regard d'une série d'ouvertures latérales ménagées dans l'arbre. Un plateau conique peut être monté coaxialement sur l'arbre rotatif, à un niveau intermédiaire entre le dispositif de projection et ledit niveau maximal, de façon qu'au moins une partie de la liqueur projetée tombe sur ce plateau.

De préférence, les moyens de circulation sont raccordés sur commande, par une première vanne à trois voies, à un conduit d'évacuation par lequel la liqueur peut être évacuée de la cuve au moyen de ladite pompe.

Afin de pouvoir vider aisément le réacteur, une forme de réalisation particulière prévoit que la pompe est réversible, que ladite première vanne à trois voies est disposée sur ledit conduit d'aspiration, et que ledit conduit de refoulement traverse un fond de la cuve à proximité d'un point bas de ce fond et comporte des orifices qui communiquent avec l'intérieur de la cuve et qui permettent d'évacuer par aspiration des matières déposées audit point bas. Ladite conduite d'aspiration peut comporter une seconde vanne à trois voies, disposée entre la sortie de la cuve et la première vanne à trois voies, cette seconde vanne étant reliée au conduit de refoulement par un conduit de dérivation.

Dans un réacteur où les moyens de chauffage comportent, de manière connue, un circuit de fluide caloporteur en serpentin à l'intérieur de la cuve, une forme de réalisation avantageuse prévoit que les moyens de chauffage comportent en outre un circuit de fluide caloporteur disposé contre une face extérieure d'une paroi périphérique de la cuve.

Par ailleurs, un tel réacteur peut comporter, dans un intervalle annulaire situé entre l'arbre rotatif et ledit circuit en serpentin, des organes d'agitation ayant des bras coudés dont des parties d'extrémité s'étendent à proximité du circuit en serpentin.

De préférence, lesdites parties d'extrémité des bras coudés sont inclinées par rapport à la verticale, de façon à créer un mouvement axial de la liqueur dans ledit intervalle annulaire.

La présente invention et ses avantages apparaîtront mieux dans la description suivante d'un exemple de réalisation, en référence aux dessins annexés, dans lesquels :
la fig. 1 représente en élévation, partiellement coupée axialement, une forme de réalisation particulière d'un réacteur selon la présente invention,
la fig. 2 est une vue schématique en coupe horizontale suivant la ligne II-II de la fig. 1.,
la fig. 3 est une vue de détail analogue à la fig. 1, illustrant le fonctionnement d'un dispositif de pompage qui fait circuler la liqueur de cacao dans le réacteur, et
la fig. 4 est une vue analogue à la, fig. 3, illustrant le fonctionnement du dispositif de pompage quand il est utilisé pour vider le réacteur.

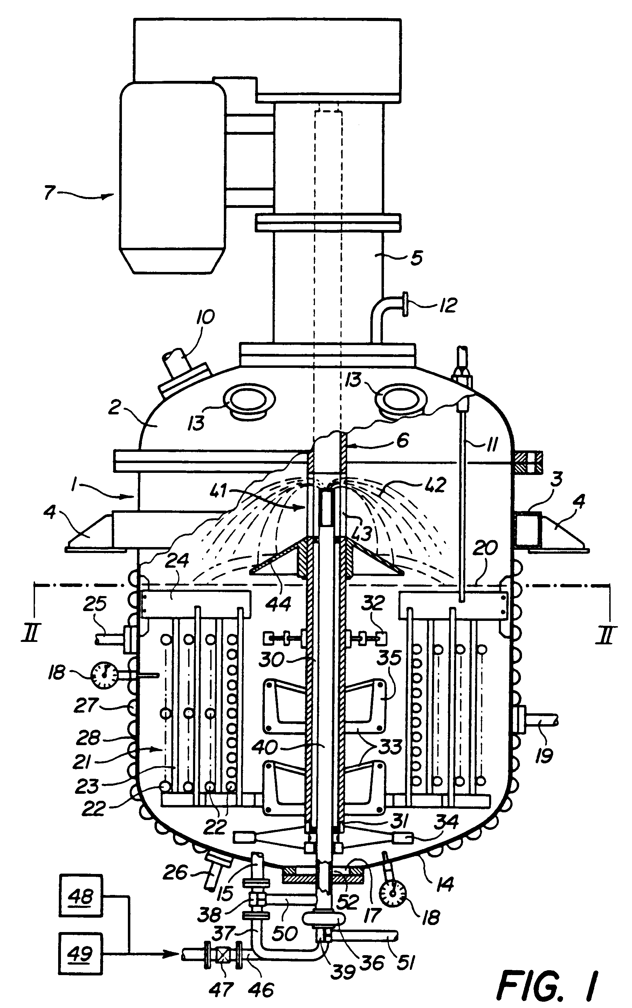

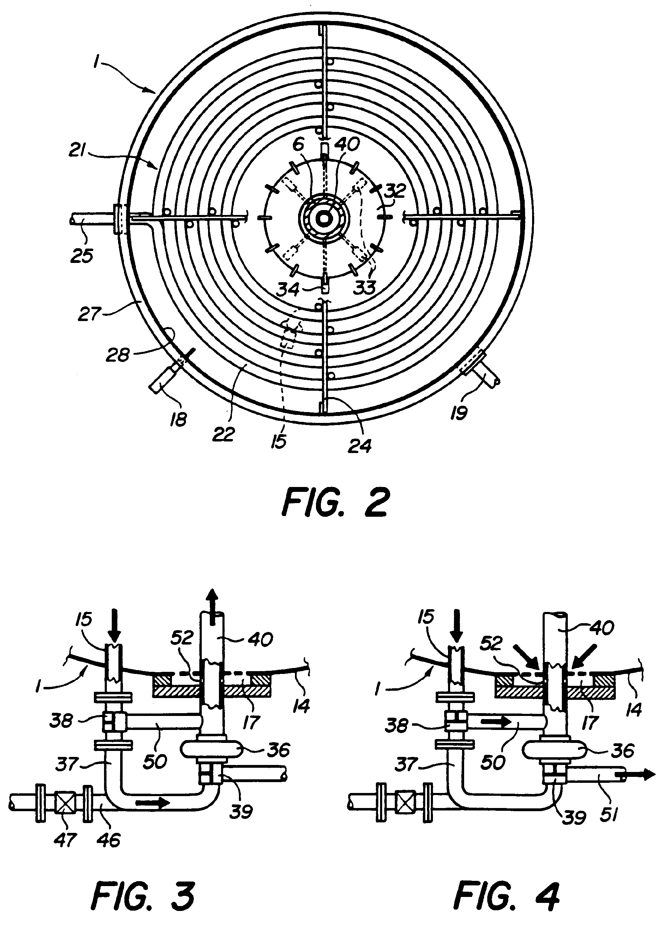

En référence aux fig. 1 et 2, le réacteur représenté comporte, de manière connue, une cuve métallique 1 fermée de manière étanche par un couvercle supérieur 2 et susceptible d'être mise aussi bien sous pression que sous vide. La cuve est pourvue d'un anneau périphérique de support 3 ayant des pattes 4 qui transmettent le poids du réacteur à un bâti non représenté. Au sommet du couvercle 2 est monté un support à pivot 5 portant d'une part un arbre rotatif 6 s'étendant verticalement au centre de la cuve 1, et d'autre part un groupe motoréducteur 7 agencé pour entraîner en rotation l'arbre 6. La fig. 1 montre aussi que le couvercle 2 est muni de différents organes classiques dans ce genre de réacteur, en particulier un raccord d'entrée 10 pour le chargement d'une liqueur de cacao à traiter dans la cuve 1, une sonde de contrôle de niveau 11, un raccord 12 pour brancher la cuve à une pompe à vide, ainsi que des hublots 13 pour le contrôle visuel.

La cuve 1 a une forme généralement cylindrique, avec un fond concave 14 muni d'un raccord 15 de sortie de liqueur, ainsi que d'une chambre centrale d'aspiration 17 qui sera décrite plus loin. En outre, la cuve est équipée de diverses sondes de température 18 et d'un raccord 19 pour le prélèvement d'échantillons de liqueur.

La cuve 1 est destinée à être remplie partiellement, jusqu'à un niveau maximal 20 contrôlé par la sonde 11, d'une masse à base de cacao, se présentant à l'état fondu et appelée généralement liqueur de cacao. Dans la cuve, cette liqueur est chauffée (et refroidie dans certains cas) au moyen d'un circuit classique 21 d'un fluide caloporteur tel que l'eau chaude ou la vapeur, ce circuit comportant plusieurs rangs concentriques de serpentins 22, portés par des supports verticaux 23 et horizontaux 24. Ce circuit entre dans la cuve par un raccord d'entrée 25 et un raccord de sortie 26. Dans l'exemple représenté, la cuve 1 comporte un second circuit de chauffage, formé par des conduits semi-circulaires 27 fixés sur la surface extérieure de la paroi métallique 28 de la cuve. Bien entendu, une couche d'isolation thermique peut recouvrir extérieurement ce circuit, qui forme une chemise chauffante utilisant avantageusement la paroi périphérique de la cuve comme surface d'échange thermique avec la liqueur. Le fluide caloporteur envoyé dans ce circuit peut être à une température différente de celui du premier circuit, par exemple plus basse pour éviter que des substances contenues dans la liqueur se collent à la paroi 28.

L'arbre rotatif 6 est un arbre creux, comportant un canal central 30, et il présente une extrémité libre 31 à proximité du fond 14 de la cuve. En dessous du niveau maximal 20, différents organes d'agitation 32, 33, 34 sont fixés à l'arbre 6 et, en tournant avec lui, créent différents mouvements de brassage de la liqueur. L'organe 32 a la forme d'un disque portant des palettes périphériques verticales ou inclinées. Les organes 33 ont la forme de bras coudés, ayant une partie d'extrémité 35 qui passe à proximité des serpentins 23, de façon à faire circuler assez rapidement la liqueur le long de ceux-ci pour éviter un échauffement localisé. Ces parties 35 peuvent être inclinées par rapport à la verticale (ce qui n'est pas représenté ici) afin de faire descendre la liqueur dans l'intervalle situé entre l'arbre 6 et le premier rang de serpentins 22, pour qu'elle remonte ensuite à travers les serpentins du circuit 21 et le long de la paroi périphérique chauffée 28. L'organe d'agitation 34 monté à l'extrémité libre 31 de l'arbre est un régulateur centrifuge de type connu, contribuant à adapter la vitesse de rotation de l'arbre à la viscosité de la liqueur traitée.

Pour faire circuler la liqueur et la projeter dans la partie supérieure de la cuve 1, c'est-à-dire au-dessus du niveau maximal 20, de façon à la mettre en contact intime avec l'air ou d'autres gaz contenus dans la cuve, le réacteur est pourvu d'une pompe extérieure 36 ayant son propre moteur (non représenté) et pouvant être commandée de manière à fonctionner indépendamment de la rotation de l'arbre 6, donc des organes d'agitation. Un côté de la pompe est raccordé au raccord de sortie 15 par un conduit d'aspiration 37 équipé de deux vannes 38 et 39 à trois voies. L'autre côté de la pompe 36 est raccordé à un conduit de refoulement 40 formé par un tube stationnaire qui traverse la chambre 17, le fond 14 de la cuve et s'étend plus haut coaxialement à l'intérieur du conduit central 30 de l'arbre 6. Dans la partie supérieure de la cuve 1, ce tube présente une tête de protection 41 pourvue d'orifices périphériques par où la liqueur pompée sort en jets 42 en forme de parapluie, à travers des ouvertures latérales 43 de l'arbre 6. Au moins une partie des jets 42 tombent sur un plateau conique 44, d'où la liqueur rejaillit plus loin. Ce dispositif de projection produit une aération intense de la liqueur pompée.

Le conduit d'aspiration 37 est pourvu d'un embranchement d'entrée 46 muni d'un clapet anti-retour 47 et raccordé, comme l'indique schématiquement la fig. 1, à une alimentation en air 48 et une alimentation en eau 49, comprenant des organes de dosage appropriés pour de l'eau et pour d'éventuelles solutions de produits de traitement à introduire dans la liqueur de cacao. Un aspect particulièrement avantageux de ce dispositif est que tous les produits introduits par l'embranchement 46 sont aussitôt mélangés intimement à la liqueur de cacao par les effets mécaniques de la pompe 36, puis de la tête de projection 41. La vanne 38 du conduit d'aspiration est reliée au conduit de refoulement 40 par un conduit de dérivation 50 dont la fonction apparaîtra plus loin. La vanne à trois voies 39 est elle raccordée à un conduit d'évacuation 51 par où la liqueur de cacao peut être transférée plus loin après son traitement. Le réseau de conduits ainsi formé est utilisable comme on le décrira ci-dessous en référence aux fig. 3 et 4, dans lesquelles les flèches indiquent les sens de circulation du liquide.

Le cas de la fig. 3 représente la circulation normale de la liqueur de cacao aspirée de la cuve par la pompe 36, à travers le raccord de sortie coudé 15 et le conduit d'aspiration 37, pour être renvoyée dans la cuve jusqu'à la tête de projection 41, à travers le conduit de refoulement 40. Grâce à la commande indépendante de la pompe par rapport aux organes d'agitation, on peut opérer les traitements correspondants de la liqueur d'une manière indépendante, simultanément ou dans des phases différentes, et à des vitesses respectives pouvant être indépendantes.

La fig. 4 montre comment la pompe 36, qui est d'un type réversible, peut être utilisée pour évacuer la liqueur de cacao de la cuve 1 quand le traitement est terminé. La vanne 38 est tournée de manière à relier la sortie 15 au conduit de refoulement 40 par le conduit de dérivation 50. La vanne 39 est tournée de manière à relier la sortie de la pompe 36 au conduit d'évacuation 51. Ainsi, la liqueur de cacao est aspirée par la pompe par le raccord de sortie 15 et refoulée dans le conduit 51. En même temps, du fait que des fentes latérales d'aspiration 52 sont ménagées dans la paroi du conduit 40 au niveau de la chambre 17, un peu de liqueur est aspirée de la cuve dans la chambre 17, puis à travers les fentes 52 et entraîne avec elle des substances plus épaisses pouvant s'être déposées dans ce point bas du fond 14 de la cuve. De cette manière, on peut vider la cuve aisément et complètement.

Un tel réacteur permet d'effectuer une vaste gamme d'opérations de traitement qui sont connues en soi, notamment toutes les opérations nécessaires pour les traitements de la liste donnée plus haut. La liqueur de cacao peut être traitée sous vide, pour en extraire les substances volatiles désagréables et dans une atmosphère non oxydante, par exemple d'azote. La liqueur peut être chauffée et maintenue à une température déterminée, pour être pasteurisée ou stérilisée pendant la durée voulue, et également être refroidie par circulation d'un fluide froid dans les serpentins. Il est facile d'ajouter à la liqueur de l'eau, de la vapeur ou des solutions alcalines pour la désacidifier. En faisant le vide, on peut faire évaporer une certaine quantité d'eau. Enfin, il est avantageux de ventiler la liqueur, pendant qu'elle est projetée en nappe mince dans la partie supérieure de l'autoclave, au moyen d'air ou d'un gaz neutre qui est évacué par la pompe à vide.

Le dispositif de circulation à pompe extérieure et indépendante, tel que décrit ci-dessus, présente encore un avantage particulier au point de vue du procédé de traitement, par le fait qu'il permet d'ajouter à la liqueur de cacao une plus grande quantité d'eau que ce qui est permis avec les appareils connus. Jusqu'à maintenant, cette quantité était limitée à environ 4 %, valeur au-delà de laquelle l'eau produisait une gélification en se liant à l'amidon du cacao. Grâce à l'effet de la pompe 36, travaillant à une vitesse élevée, sur les propriétés rhéologiques de la liqueur, et grâce à l'agitation intense obtenue par les organes appropriés à l'intérieur de la cuve, le réacteur selon l'invention est capable d'appliquer à la liqueur une énergie mécanique plus importante et mieux distribuée de sorte qu'il autorise de travailler avec une teneur en eau accrue, dont le maximum se situe entre 6 et 8 %. Or, une augmentation de la teneur en eau augmente l'efficacité de la stérilisation. Plus précisément, il est connu que chaque addition de 1% d'eau a un effet équivalent à une augmentation virtuelle de 7°C de la température de stérilisation. Ainsi, si l'on stérilise à 120°C et qu'on ajoute 2% d'eau supplémentaire, l'effet de stérilisation est le même que si l'on travaillait à 134°C. Ainsi, le traitement est plus efficace et sa durée peut être réduite.

La possibilité d'augmenter la teneur en eau est aussi avantageuse pour l'opération de désacidification par l'adjonction d'une solution alcaline. On utilise en général du carbonate de potassium, qui doit représenter environ 2% du cacao solide. Si la quantité d'eau est limitée à 4%, on doit donc employer une solution très concentrée qui crée un risque de saponification du gras du cacao. Dans un réacteur selon l'invention, ce risque bien connu est fortement réduit par la possibilité d'augmenter sensiblement la teneur en eau. Par ailleurs, comme cette quantité d'eau sera évacuée en grande partie par l'évaporation sous vide dans le réacteur, cette évaporation aura pour effet secondaire d'extraire de la liqueur une plus grande quantité de l'acidité volatile qu'elle contient, notamment l'acide acétique libre.

La présente invention n'est pas limitée à l'exemple de réalisation décrit ci-dessus, mais elle s'étend à toute modification ou variante comme décrite dans les revendications. En particulier, il faut mentionner que le conduit de refoulement 40 ne doit pas nécessairement être disposé à l'intérieur de l'arbre rotatif : on pourrait prévoir qu'il remonte latéralement dans la cuve, pour aboutir à des organes stationnaires de projection qui sont complètement indépendants de l'arbre. Dans les deux cas, l'extraction de l'arbre vers le haut pour le nettoyage peut se faire aisément sans démontage des organes de projection.

## Revendications

1. Réacteur pour traiter une liqueur de cacao et ses dérivés, comportant :
- une cuve fermée (1) pourvue d'au moins une entrée et une sortie pour ladite liqueur, et agencée pour contenir cette liqueur en dessous d'un niveau maximal donné (20),
- des moyens (21) de chauffage de la liqueur,
- au moins un raccord à vide, reliant la cuve à une pompe à vide,
- des moyens (48, 49) pour introduire des fluides de traitement dans la cuve,
- des moyens d'agitation comportant un arbre rotatif (6) s'étendant verticalement dans la cuve, des organes d'agitation montés sur cet arbre et des organes d'entraînement couplés à cet arbre, et
- des moyens de circulation comportant au moins une pompe et un dispositif de projection (41) alimenté par cette pompe, la pompe prélevant de la liqueur au bas de la cuve, et le dispositif de projection étant agencé pour projeter cette liqueur dans une partie supérieure de la cuve, au-dessus dudit niveau maximal,
caractérisé en ce que la pompe (36) des moyens de circulation se trouve à l'extérieur de la cuve (1) et est actionnée par des moyens d'entraînement qui sont distincts de ceux (7) de l'arbre rotatif (6), en ce que les moyens de circulation comportent un conduit d'aspiration (37), reliant ladite sortie de la cuve à la pompe, et un conduit de refoulement (40) allant de la pompe jusqu'à l'intérieur de la cuve, et en ce que des moyens (48, 49) pour introduire des fluides dans la liqueur sont raccordés à ladite conduite d'aspiration.

2. Réacteur selon la revendication 1, caractérisé en ce que lesdits moyens (49) pour introduire des fluides comportent des moyens pour introduire de l'eau ou des solutions aqueuses.

3. Réacteur selon la revendication 1 ou 2, caractérisé en ce que lesdits moyens (48) pour introduire des fluides comportent des moyens pour introduire de l'air.

4. Réacteur selon la revendication 1, caractérisé en ce que l'arbre rotatif comporte un canal central (30) s'étendant vers le haut à partir de l'extrémité inférieure de l'arbre, en ce que le conduit de refoulement (40) s'étend dans ledit canal central, et en ce que le dispositif de projection (41) est disposé sur ou dans l'arbre rotatif.

5. Réacteur selon la revendication 4, caractérisé en ce que le dispositif de projection (41) est monté sur un tube axial stationnaire formant le conduit de refoulement (40) à l'intérieur dudit canal central et se trouve en regard d'une série d'ouvertures latérales (43) ménagées dans l'arbre.

6. Réacteur selon la revendication 4 ou 5, caractérisé en ce qu'un plateau conique (44) est monté coaxialement sur l'arbre rotatif, à un niveau intermédiaire entre le dispositif de projection (41) et ledit niveau maximal (20), de façon qu'au moins une partie de la liqueur projetée tombe sur ce plateau (44).

7. Réacteur selon l'une des revendications précédentes, caractérisé en ce que les moyens de circulation sont raccordés sur commande, par une première vanne à trois voies (39), à un conduit d'évacuation (51) par lequel la liqueur peut être évacuée de la cuve au moyen de ladite pompe (36).

8. Réacteur selon la revendication 7, caractérisé en ce que la pompe (36) est réversible, en ce que ladite première vanne à trois voies (39) est disposée sur ledit conduit d'aspiration, et en ce que ledit conduit de refoulement traverse un fond (14) de la cuve à proximité d'un point bas de ce fond et comporte des orifices (52) qui communiquent avec l'intérieur de la cuve et qui permettent d'évacuer par aspiration des matières déposées audit point bas.

9. Réacteur selon la revendication 8, caractérisé en ce que ladite conduite d'aspiration (37) comporte une seconde vanne à trois voies (38), disposée entre ladite sortie (15) de la cuve et la première vanne à trois voies (39), cette seconde vanne étant reliée au conduit de refoulement par un conduit de dérivation (50).

10. Réacteur selon l'une des revendications précédentes, dans lequel les moyens de chauffage comportent un circuit de fluide caloporteur (21) en serpentin à l'intérieur de la cuve, caractérisé en ce que les moyens de chauffage comportent en outre un circuit de fluide caloporteur (27) disposé contre une face extérieure d'une paroi périphérique (28) de la cuve.

11. Réacteur selon l'une des revendications précédentes, dans lequel les moyens de chauffage comportent un circuit de fluide caloporteur (21) en serpentin à l'intérieur de la cuve, caractérisé en ce qu'il comporte, dans un intervalle annulaire situé entre l'arbre rotatif (6) et ledit circuit en serpentin (21), des organes d'agitation (33) ayant des bras coudés dont des parties d'extrémité (35) s'étendent à proximité du circuit en serpentin.

12. Réacteur selon la revendication 11, caractérisé en ce que lesdites parties d'extrémité (35) des bras coudés sont inclinées par rapport à la verticale, de façon à créer un mouvement axial de la liqueur dans ledit intervalle annulaire.

## Patentansprüche

1. Reaktor für die Behandlung von flüssigem Kakao und seinen Derivaten, bestehend aus:
- einem geschlossenen Behälter (1), der mit mindestens einem Ein- und einem Auslauf für den besagten flüssigen Kakao versehen und eingerichtet ist, um diesen flüssigen Kakao unterhalb einer festgesetzten maximalen Standhöhe (20) zu halten;
- Einrichtungen (21) für die Erhitzung des flüssigen Kakaos;
- mindestens einem Vakuumsanschluß, der den Behälter mit einer Vakuumpumpe verbindet;
- Einrichtungen (48,49) für das Einführen von Behandlungsmedien in den Behälter;
- Einrichtungen für das Umrühren, bestehend aus einer drehenden Welle (6), die sich senkrecht in dem Behälter erstreckt, Rührorganen, die auf dieser Welle angeordnet sind, und Antriebsorganen, die mit dieser Welle gekoppelt sind, und
- Einrichtungen für den Umlauf, bestehend aus mindestens einer Pumpe und einer Sprühvorrichtung (41), die von dieser Pumpe gespeist wird, wobei die Pumpe unten in dem Behälter flüssigen Kakao entnimmt und die Sprühvorrichtung eingerichtet ist, um den flüssigen Kakao in einem oberen Bereich des Behälters, oberhalb der besagten maximalen Standhöhe zu versprühen,
**dadurch gekennzeichnet**, daß die Pumpe (36) der Umlaufeinrichtungen außerhalb des Behälters (1) angebracht und von Einrichtungen angetrieben wird, die von den Antriebseinrichtungen (7) für die drehende Welle (6) getrennt sind, daß die Umlaufeinrichtungen eine Saugleitung (37), die den besagten Auslauf an dem Behälter mit der Pumpe verbindet, und eine Förderleitung (40) von der Pumpe bis zum Inneren des Behälters aufweisen, und daß Einrichtungen (48,49) für das Einführen von Medien in den flüssigen Kakao mit der besagten Saugleitung verbunden sind.

2. Reaktor nach Anspruch 1,
**dadurch gekennzeichnet**, daß die besagten Einrichtungen (49) für das Einführen von Medien Einrichtungen für das Einführen von Wasser oder von wässerigen Lösungen aufweisen.

3. Reaktor nach Anspruch 1 oder 2,
**dadurch gekennzeichnet**, daß die besagten Einrichtungen (48) für das Einführen von Medien Einrichtungen für das Einführen von Luft aufweisen.

4. Reaktor nach Anspruch 1,
**dadurch gekennzeichnet**, daß die drehende Welle einen mittleren Kanal (30) enthält, der sich von dem unteren Ende der Welle nach oben erstreckt, daß die Förderleitung (40) sich in dem besagten mittleren Kanal erstreckt, und daß die Sprühvorrichtung (41) auf oder in der drehenden Welle angeordnet ist.

5. Reaktor nach Anspruch 4,
**dadurch gekennzeichnet**, daß die Sprühvorrichtung (41) auf einem feststehenden axialen Rohr angeordnet ist, das die Förderleitung (40) innerhalb des besagten mittleren Kanals bildet und gegenüber einer Reihe von seitlichen Öffnungen (43), die in der Welle angebracht sind, liegt.

6. Reaktor nach Anspruch 4 oder 5,
**dadurch gekennzeichnet**, daß eine konische Platte (44) koaxial auf der drehenden Welle auf einer Höhe zwischen der Sprühvorrichtung (41) und der besagten maximalen Standhöhe (20) derart angeordnet ist, so daß mindestens ein Teil des versprühten flüssigen Kakaos auf diese Platte (44) fällt.

7. Reaktor nach einem der vorstehenden Ansprüchen,
**dadurch gekennzeichnet**, daß die Umlaufeinrichtungen für eine Betätigung durch einen ersteren Dreiwegschieber (39) mit einer Ablaufleitung (51) verbunden sind, durch die der flüssige Kakao aus dem Behälter mit Hilfe der besagten Pumpe (36) entleert werden kann.

8. Reaktor nach Anspruch 7,
**dadurch gekennzeichnet**, daß die Pumpe (36) reversibel ist, daß der besagte erste Dreiwegschieber (39) in der besagten Saugleitung angeordnet ist, und daß die besagte Förderleitung einen Boden (14) des Behälters in der Nähe einer tiefen Stelle dieses Bodens durchquert und Öffnungen (52) aufweist, die mit dem Inneren des Behälters in Verbindung stehen und die Entleerung der Stoffe, die sich an der besagten tiefen Stelle abgesetzt haben, durch Absaugung ermöglichen.

9. Reaktor nach Anspruch 8,
**dadurch gekennzeichnet**, daß die besagte Saugleitung (37) einen zweiten Dreiwegschieber (38) aufweist, der zwischen dem Auslauf (15) am Behälter und dem ersten Dreiwegschieber (39) angeordnet ist, wobei dieser zweite Schieber mit der Förderleitung durch eine Bypassleitung (50) verbunden ist.

10. Reaktor nach einem der vorstehenden Ansprüche, bei dem die Heizeinrichtungen einen schlangenförmigen Kreislauf eines wärmetragenden Mediums (21) innerhalb des Behälters aufweisen,
**dadurch gekennzeichnet**, daß die Heizeinrichtungen außerdem einen Kreislauf eines wärmetragenden Mediums (27), der gegen eine außenliegende Fläche einer peripheren Wandung (28) des Behälters angeordnet ist, enthalten.

11. Reaktor nach einem der vorstehenden Ansprüche, bei dem die Heizeinrichtungen einen schlangenförmigen Kreislauf eines wärmetragenden Mediums (21) innerhalb des Behälters enthalten,
**dadurch gekennzeichnet**, daß dieser Reaktor in einem ringförmigen Raum zwischen der drehenden Welle (6) und dem besagten schlangenförmigen Kreislauf (21) Rührorgane (33) mit gebogenen Armen aufweist, deren Enden (35) sich in der Nähe des schlangenförmigen Kreislaufes erstrecken.

12. Reaktor nach Anspruch 11,
**dadurch gekennzeichnet**, daß die besagten Enden (35) der gebogenen Arme gegenüber der Senkrechten geneigt sind, um eine axiale Bewegung des flüssigen Kakaos in dem besagten ringförmigen Raum zu erzeugen.

## Claims

1. Reaction vessel for treating a cocoa solution and its derivatives, comprising :
- a closed vat (1) provided with at least one inlet and one outlet for said solution, and designed to maintain this solution below a pre-determined maximum level (20);
- means (21) for heating said solution;
- at least one vacuum connection connecting the vat to a vacuum pump;
- means (48, 49) for introducing treatment fluids into the vat;
- stirring means comprising a rotatable shaft (6) extending vertically in the vat, stirring elements attached to said shaft and drive elements connected to said shaft; and
- circulation means comprising at least one pump and a spray device (41) fed by said pump, the pump drawing off solution from the base of the vat and the spray device being designed to project this solution into an upper portion of the vat, above said maximum level,
characterized in that the pump (36) for the circulation means is located outside the vat (1) and is activated by control means which are distinct from those (7) for the rotatable shaft (6), in that the circulation means comprise a suction pipe (37) connecting said vat outlet to the pump, and a delivery pipe (40) going from the pump to inside the vat, and in that the means (48, 49) for introducing fluids into the solution are connected to said suction pipe.

2. Reaction vessel according to claim 1, characterized in that said means (49) for introducing fluids comprise means for introducing water or aqueous solutions.

3. Reaction vessel according to claims 1 or 2, characterized in that said means (48) for introducing fluids comprise means for introducing air.

4. Reaction vessel according to claim 1, characterized in that the rotatable shaft comprises a central canal (30) extending upwardly from the lower end of the shaft, in that the delivery pipe (40) extends into said central canal, and in that the spray device (41) is located on or in the rotatable shaft.

5. Reaction vessel according to claim 4, characterized in that the spray device (41) is attached to a stationary axial tube forming the delivery pipe (40) inside said central canal and is located across from a series of lateral openings (43) formed in the shaft.

6. Reaction vessel according to claims 4 or 5, characterized in that a conical plate (44) is coaxially mounted on the rotatable shaft, at an intermediate level between the spray device (41) and said maximum level (20), in such a way that at least a portion of the sprayed solution falls onto this plate (44).

7. Reaction vessel according to any one of the preceding claims, characterized in that the circulation means are connected on command, by a first triple outlet valve (39), to an evacuation pipe (51) through which the solution may be evacuated from the vat by means of said pump (36).

8. Reaction vessel according to claim 7, characterized in that the pump (36) is reversible, in that said first triple outlet valve (39) is situated on said suction pipe, and in that said delivery pipe traverses a base (14) of the vat near a low point in said base and comprises orifices (52) which communicate with the inside of the vat and which allow vacuum evacuation of materials deposited on said low point.

9. Reaction vessel according to claim 8, characterized in that said suction pipe (37) comprises a second triple outlet valve (38), disposed between said outlet (15) of the vat and the first triple outlet valve (39), this second valve being connected to the delivery pipe by a distributing pipe (50).

10. Reaction vessel according to any one of the preceding claims, in which the heating means comprise a coiled circuit for heat-transmitting liquid (21) inside the vat, characterized in that the heating means further comprise a circuit of heat-transmitting fluid (27) located against an outside surface of one peripheral wall (28) of the vat.

11. Reaction vessel according to any one of the preceding claims, in which the heating means comprise a coiled circuit for heat-transmitting liquid (21) inside the vat, characterized in that it comprises, in an annular space situated between the rotatable shaft (6) and said coiled circuit (21), stirring elements (33) with angled arms, the end portions (35) of which extend to the region of the coiled circuit.

12. Reaction vessel according to claim 11, characterized in that said end portions (35) of the angled arms are slanted in relation to the vertical, so as to create axial movement of the solution in said annular space.
